# EUROPÄISCHE PATENTSCHRIFT

(11) **EP 2 940 772 B1**
(45) Veröffentlichungstag und Bekanntmachung des Hinweises auf die Patenterteilung: **17.10.2018**
(21) Anmeldenummer: 15163826.9
(22) Anmeldetag: 16.04.2015
(51) Int. Cl.: H01M 8/04, H01M 16/00

(54) **VERFAHREN ZUM BETREIBEN EINER BRENNSTOFFZELLENVORRICHTUNG UND BRENNSTOFFZELLENVORRICHTUNG MIT LADEBEGRENZER**
METHOD FOR OPERATING A FUEL CELL DEVICE AND FUEL CELL DEVICE WITH LOAD LIMITER
PROCÉDÉ DE FONCTIONNEMENT D'UN DISPOSITIF À PILE À COMBUSTIBLE ET DISPOSITIF À PILE À COMBUSTIBLE DOTÉ D'UN LIMITEUR DE CHARGE

(30) Priorität: 30.04.2014 DE 102014208229
(43) Veröffentlichungstag der Anmeldung: 04.11.2015
(73) Patentinhaber: Volkswagen AG, 38440 Wolfsburg (DE); AUDI AG, 85045 Ingolstadt (DE)
(72) Erfinder: Bach, Peter, Burnaby, British Columbia, V5J 5J8 (CA); Hortop, Matthew Kenneth, 38114 Braunschweig (DE)

(56) Entgegenhaltungen:
- DE-A1- 3 528 673
- US-A1- 2006 088 738
- US-A1- 2010 119 898
- US-A1- 2010 273 080

## Beschreibung

Die Erfindung betrifft ein Verfahren zum Betreiben einer Brennstoffzellenvorrichtung, bei dem mit einer Brennstoffzelle elektrische Energie bereitgestellt und zumindest teilweise gespeichert wird, wobei ein Wert für eine maximal zu speichernde Energie in Abhängigkeit von einer Umgebungstemperatur der Brennstoffzelle vorgegeben wird. Ferner betrifft die Erfindung eine Brennstoffzellenvorrichtung mit einer Brennstoffzelle und einem Energie übertragend mit der Brennstoffzelle verbundenen Speicher elektrischer Energie, wobei die Brennstoffzellenvorrichtung eine Umgebungstemperatur-Bestimmungseinheit und einen Ladebegrenzer aufweist, wobei der Ladebegrenzer ausgebildet ist, die im Speicher maximal zu speichernde Energie in Abhängigkeit eines Steuersignals der Umgebungstemperatur-Bestimmungseinheit zu begrenzen. Des Weiteren betrifft die Erfindung ein Kraftfahrzeug mit einem Antriebssystem und einer Antriebsenergie übertragend mit dem Antriebssystem verbundenen Brennstoffzellenvorrichtung.

Verfahren zum Betreiben von Brennstoffzellenvorrichtungen und Brennstoffzellenvorrichtungen sowie Kraftfahrzeuge mit Brennstoffzellenvorrichtungen sind allgemein bekannt. Beispielsweise offenbaren die Druckschriften DE 102012018710 A1, DE 102013101826 A1, US 2010/119898 A1 und US 2010/273080 A1 Brennstoffzellenvorrichtungen mit Speichern.

Um die Brennstoffzelle in einem optimalen Betriebszustand halten zu können, wird der elektrische Speicher verwendet und beispielsweise mit elektrischer Energie gefüllt, wenn ein Verbraucher der Brennstoffzellenenergie nur wenig Energie benötigt. Somit kann die Brennstoffzelle in einem optimalen Betriebszustand betrieben werden, in dem sie mehr Energie erzeugt, als der Verbraucher benötigt. Im optimalen Betriebszustand ist die Brennstoffzelle beispielsweise mit einem hohen Wirkungsgrad betreibbar. Darüber hinaus kann der Speicher Energie an den Verbraucher abgeben, falls dieser mehr Energie benötigt, als die Brennstoffzelle insbesondere in ihrem optimalen Betriebszustand bereitstellen kann.

Herrschen bei einer Inbetriebnahme der Brennstoffzelle jedoch Umgebungstemperaturen, die unterhalb einer für den Betrieb der Brennstoffzelle optimalen Umgebungstemperatur liegen, so ist die Brennstoffzelle aufzuwärmen, um möglichst schnell eine optimale Betriebstemperatur zu erreichen. Fragt der Verbraucher jedoch nur wenig elektrische Energie von der Brennstoffzelle ab und kann der Speicher keine Energie aufnehmen, so muss die Brennstoffzelle beheizt werden, um deren Betriebstemperatur möglichst schnell in einen optimalen Bereich bringen zu können. Das Aufheizen der Brennstoffzelle, zum Beispiel mit einer elektrisch betreibbaren Heizvorrichtung, benötigt jedoch Energie, die dann nicht mehr für den Verbraucher zur Verfügung steht.

Der Erfindung liegt nun die Aufgabe zugrunde, ein Verfahren zum Betreiben einer Brennstoffzellenvorrichtung sowie eine Brennstoffzellenvorrichtung und ein Kraftfahrzeug mit einer Brennstoffzellenvorrichtung bereitzustellen, wobei die Brennstoffzelle effizient betreibbar ist.

Für das eingangs genannte Verfahren ist die Aufgabe dadurch gelöst, dass die maximal zu speichernde Energie so begrenzt vorgegeben wird, dass eine Differenzenergie zwischen der maximal speicherbaren Energie und der vorgegebenen maximal zu speichernden Energie ausreicht, damit sich die Brennstoffzelle bei einem Start der Brennstoffzellenvorrichtung durch interne Verluste bei der Bereitstellung der Differenzenergie selbst ausreichend aufwärmt. Die erfindungsgemäße Lösung ist für die eingangs genannte Brennstoffzellenvorrichtung dadurch erreicht, dass der Ladebegrenzer ausgebildet ist, die maximal zu speichernde Energie so begrenzt vorzugeben, dass eine Differenzenergie zwischen der maximal speicherbaren Energie und der vorgegebenen maximal zu speichernden Energie ausreicht, damit sich die Brennstoffzelle bei einem Start der Brennstoffzellenvorrichtung durch interne Verluste bei der Bereitstellung der Differenzenergie selbst ausreichend aufwärmt. Für das Kraftfahrzeug ist die Aufgabe dadurch gelöst, dass die Brennstoffzellenvorrichtung eine erfindungsgemäße Brennstoffzellenvorrichtung ist.

Wird die Brennstoffzellenvorrichtung bei einer niedrigen Umgebungstemperatur nun in Betrieb genommen und fragt der Verbraucher nicht ausreichend Energie von der Brennstoffzelle ab, damit sich diese durch interne Verluste selbst bis zu einer optimalen Betriebstemperatur erwärmen kann, so ist es dennoch möglich, dass die Brennstoffzelle ausreichend Energie abgeben kann, um sich durch die internen Verluste ausreichend aufzuheizen. Die vom Verbraucher nicht benötigte Energie wird im Speicher gespeichert und steht somit weiterhin für den Verbraucher zur Verfügung.

Die erfindungsgemäße Lösung kann durch verschiedene, jeweils für sich vorteilhafte und, sofern im Einzelfall nicht anders ausgeführt, beliebig miteinander kombinierbarer Ausgestaltungen weiter verbessert werden. Auf diese Ausgestaltungsformen und die mit ihnen verbundenen Vorteile ist im Folgenden eingegangen.

So können die Umgebungstemperatur mit einer vorgegebenen Temperatur verglichen und die maximal zu speichernde Energie begrenzt werden, wenn die Umgebungstemperatur unterhalb der vorgegebenen Temperatur liegt. Durch den Vergleich kann die maximal zu speichernde Energie für unterschiedliche Umgebungstemperaturen flexibel begrenzt werden.

Die Brennstoffzellenvorrichtung kann insbesondere ausgebildet sein, das erfindungsgemäße Verfahren durchzuführen.

Die Umgebungstemperatur kann eine zu einem vordefinierten Zeitpunkt oder bei einem Abschalten des Verbrauchers herrschende Umgebungstemperatur sein. Der Zeitpunkt ist beispielsweise 18 Uhr. Liegt die Umgebungstemperatur unterhalb einer vorbestimmten Temperatur, zum Beispiel unterhalb einer Solltemperatur, so kann die Umgebungstemperatur-Bestimmungseinheit das Steuersignal erzeugen und ausgeben.

Wenn die Umgebungstemperatur unterhalb der Solltemperatur liegt, so besteht eine hohe Wahrscheinlichkeit von beispielsweise mehr als 50 %, 75 % oder 90 %, dass eine bei einem bevorstehenden Startvorgang herrschende Umgebungstemperatur unterhalb eines für den Betrieb der Brennstoffzelle optimalen Temperaturbereichs liegt. Die Umgebungstemperatur kann also eine während eines bevorstehenden Startvorgangs voraussichtlich herrschende Umgebungstemperatur sein, die beispielsweise anhand einer aktuellen Umgebungstemperatur abgeschätzt wird. Zum Beispiel liegt die voraussichtlich herrschende Umgebungstemperatur unter null Grad Celsius oder die Solltemperatur für die aktuelle Umgebungstemperatur bei über null Grad Celsius, beispielsweise bei 3 Grad Celsius.

Um die voraussichtlich herrschende Umgebungstemperatur bestimmen zu können, kann die Umgebungstemperatur-Bestimmungseinheit eine Temperaturvorhersageeinheit zur Vorhersage von zu erwartenden Umgebungstemperaturen aufweisen, wobei die Umgebungstemperatur-Bestimmungseinheit die zu erwartende Umgebungstemperatur basierend auf der aktuell herrschenden Umgebungstemperatur abschätzen kann. Zur Ermittlung der aktuell herrschenden Temperatur kann die Brennstoffzellenvorrichtung einen Temperatursensor aufweisen, der Messsignal übertragend mit der Temperaturvorhersageeinheit verbunden ist.

Ein Schluss aus der aktuellen Umgebungstemperatur auf die voraussichtlich herrschende Umgebungstemperatur kann jedoch fehleranfällig sein. Beispielsweise kann sich die Umgebungstemperatur während der Nacht erhöhen oder so stark absenken, dass entweder keine Energie zum Aufwärmen der Brennstoffzelle benötigt wird, oder dass die durch den Speicher aufnehmbare Energie selbst in Kombination mit der vom Verbraucher abgefragten Energie nicht ausreicht, um die Brennstoffzelle schnell genug aufzuwärmen. Um die voraussichtlich herrschende Umgebungstemperatur besser abschätzen zu können, kann die Umgebungstemperatur-Bestimmungseinheit einen Dateneingang zum Empfang von zu erwartende Umgebungstemperaturen repräsentierenden Temperaturdaten aufweisen. Die Temperaturdaten können beispielsweise über Datenfunk oder eine andere Datenquelle, zum Beispiel eine Ladestation für den Speicher, bereitgestellt werden.

Die maximal zu speichernde Energie wird vorzugsweise so begrenzt vorgegeben, dass eine Differenzenergie zwischen der maximal speicherbaren Energie und der vorgegebenen maximal zu speichernden Energie ausreicht, damit sich die Brennstoffzelle bei einem Start der Brennstoffzellenvorrichtung durch interne Verluste bei der Bereitstellung der Differenzenergie selbst ausreichend aufwärmt. Dabei kann die Differenzenergie wenigstens teilweise oder sogar vollständig im Speicher gespeichert werden.

Wird der Verbraucher zusammen mit der Brennstoffzelle in Betrieb genommen, kann die Differenzenergie so bemessen werden, dass diese zusammen mit der vom Verbraucher benötigten Energie ausreicht, damit sich die Brennstoffzelle selbst ausreichend erwärmt. Falls die Brennstoffzelle bei der Inbetriebnahme des Verbrauchers bereits optimal vorgewärmt sein soll, kann die Differenzenergie so vorgegeben werden, dass diese ausreicht, damit sich die Brennstoffzelle durch deren Bereitstellung ausreichend aufheizt.

Der Speicher kann beispielsweise ein Kondensator sein, der elektrische Energie schnell aufnehmen und abgeben kann. Zur Speicherung von elektrischer Energie werden jedoch oftmals wiederaufladbare Batterien verwendet. Um einen separaten Speicher, beispielsweise den Kondensator, zu vermeiden, kann der Speicher die wiederaufladbare Batterie sein.

Die Brennstoffzellenvorrichtung kann eine stationäre Brennstoffzellenvorrichtung sein, die zum Beispiel ein Wohnhaus oder eine Industrieanlage mit elektrischer Energie versorgt. Ist die Brennstoffzellenvorrichtung eine Brennstoffzellenvorrichtung für ein Kraftfahrzeug, kann der Speicher eine Antriebsenergie für das Kraftfahrzeug speichernde, wiederaufladbare Batterie sein. Dies ist insbesondere vorteilhaft, da ein separater Speicher unnötig Bauraum benötigen und das Gewicht der Brennstoffzellenvorrichtung erhöhen würde. Bauraum ist jedoch vielfach und insbesondere in Kraftfahrzeugen beschränkt vorhanden. Zusätzliches Gewicht erhöht den Verbrauch des Kraftfahrzeuges.

Im Folgenden ist die Erfindung beispielhaft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde. Es zeigen:
- Figuren 1 bis 3: schematische Darstellungen von Ausführungsbeispielen eines erfindungsgemäßen Verfahrens;
- Figur 4: ein Ausführungsbeispiel einer erfindungsgemäßen Brennstoffzellenvorrichtung; und
- Figur 5: ein Ausführungsbeispiel eines erfindungsgemäßen Kraftfahrzeuges.

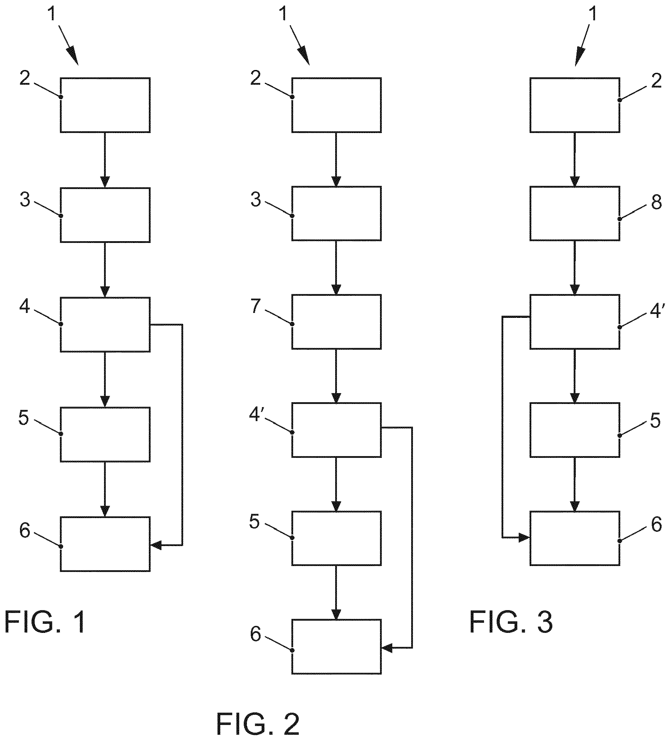

Zunächst ist das erfindungsgemäße Verfahren mit Bezug auf das Ausführungsbeispiel der Figur 1 beschrieben. Figur 1 zeigt das erfindungsgemäße Verfahren 1 schematisch als ein Flussdiagramm. In einem ersten Verfahrensschritt 2 startet das Verfahren 1. Beispielsweise startet das Verfahren 1 bei einer vorbestimmten Uhrzeit oder vor einem Abschalten eines mit einer Brennstoffzellenvorrichtung versorgten Verbrauchers. Ist der Verbraucher ein Antriebssystem für ein Kraftfahrzeug, so kann das Verfahren 1 starten, wenn das Kraftfahrzeug einen vordefinierten Abstand zu einem vorgegebenen Ziel hat.

In einem auf den Verfahrensschritt 2 folgenden Verfahrensschritt 3 kann eine aktuelle Umgebungstemperatur der Brennstoffzellenvorrichtung bestimmt und zum Beispiel gemessen werden. Auf den Verfahrensschritt 3 kann der Verfahrensschritt 4 folgen, in dem die aktuelle Umgebungstemperatur mit einer vorgegebenen Temperatur, zum Beispiel ein Grenzwert, verglichen wird. Liegt die aktuelle Umgebungstemperatur unterhalb des Grenzwertes, so wird im nun folgenden Verfahrensschritt 5 die maximal zu speichernde Energie begrenzt. Die maximal zu speichernde Energie kann abhängig von der Höhe der aktuellen Umgebungstemperatur begrenzt werden. Ist die aktuelle Umgebungstemperatur weiter unterhalb des Grenzwertes, so kann die maximal zu speichernde Energie niedriger vorgegeben werden, als wenn die aktuelle Umgebungstemperatur dichter beim Grenzwert liegt.

Liegt die aktuelle Umgebungstemperatur nicht unterhalb des Grenzwertes, kann auf den Verfahrensschritt 4 der Verfahrensschritt 6 folgen, in dem das Verfahren 1 endet. Alternativ folgt der Verfahrensschritt 6 auf den Verfahrensschritt 5, beispielsweise, wenn die maximal zu speichernde Energie erreicht oder unterschritten wird. Liegt die gespeicherte Energie oberhalb der maximal zu speichernden Energie, kann die gespeicherte Energie bis zur maximal zu speichernden Energie abgesenkt und hierzu zum Beispiel zum Verbraucher geleitet werden. Nach dem Verfahrensschritt 8 kann die gespeicherte Energie überwacht werden, um zu verhindern, dass mehr als die vorgegebene maximal zu speichernde Energie gespeichert wird.

Figur 2 zeigt ein weiteres Ausführungsbeispiel des erfindungsgemäßen Verfahrens 1 schematisch als ein Flussdiagramm. Für Elemente, die in Funktion und/oder Aufbau den Elementen des Ausführungsbeispiels der Figur 1 entsprechen, sind dieselben Bezugszeichen verwendet.

Der Kürze halber ist lediglich auf die Unterschiede zum Ausführungsbeispiel der Figur 1 eingegangen.

Die Verfahrensschritte 2 und 3 des in der Figur 2 dargestellten Verfahrens 1 entsprechen den Verfahrensschritten 2 und 3 des Ausführungsbeispiels der Figur 1. Auf den Verfahrensschritt 3 folgt im Ausführungsbeispiel der Figur 2 jedoch ein Verfahrensschritt 7, in dem ausgehend von der aktuellen Umgebungstemperatur eine bei einem voraussichtlich stattfindenden Startvorgang der Brennstoffzellenvorrichtung und/oder des Verbrauchers zu erwartende Umgebungstemperatur abgeschätzt wird.

In einem auf den Verfahrensschritt 7 folgenden Verfahrensschritt 4' wird die zu erwartende Umgebungstemperatur mit der vorgegebenen Temperatur, etwa einem Schwellwert, verglichen. Liegt die zu erwartende Umgebungstemperatur unterhalb des Schwellwertes, so wird im folgenden Verfahrensschritt 5 die zu speichernde Energie begrenzt. Die Differenz des Schwellwertes und der zu erwartenden Umgebungstemperatur kann dabei umgekehrt proportional zur Höhe der Begrenzung der maximal zu speichernden Energie sein. Liegt die gespeicherte Energie oberhalb der maximal zu speichernden Energie, kann die gespeicherte Energie zumindest bis zur maximal zu speichernden Energie abgesenkt und hierzu zum Beispiel zum Verbraucher geleitet werden. Auf den Verfahrensschritt 5 folgt wieder der Verfahrensschritt 6, in dem das Verfahren 1 endet. Liegt die zu erwartende Umgebungstemperatur nicht unterhalb des Schwellwertes, kann auf den Verfahrensschritt 4' sofort der Verfahrensschritt 6 folgen.

Figur 3 zeigt ein weiteres Ausführungsbeispiel des erfindungsgemäßen Verfahrens 1 schematisch als ein Flussdiagramm. Für Elemente, die in Funktion und/oder Aufbau den Elementen der Ausführungsbeispiele der Figuren 1 oder 2 entsprechen, sind dieselben Bezugszeichen verwendet. Der Kürze halber ist lediglich auf die Unterschiede zu den bisherigen Ausführungsbeispielen eingegangen.

Das Verfahren 1 startet mit dem Verfahrensschritt 2, auf den der Verfahrensschritt 8 folgen kann. Im Verfahrensschritt 8 wird die bei einem zukünftigen Startvorgang zu erwartende Umgebungstemperatur empfangen. Im nun folgenden Verfahrensschritt 4' wird die zu erwartende Umgebungstemperatur mit der vorgegebenen Temperatur, beispielsweise der Schwellwert, verglichen. Anhand des Vergleichs wird bestimmt, ob die zu speichernde Energie im Verfahrensschritt 5 begrenzt werden soll. Liegt die gespeicherte Energie oberhalb der maximal zu speichernden Energie, kann die gespeicherte Energie zumindest bis zur maximal zu speichernden Energie abgesenkt und hierzu zum Beispiel zum Verbraucher geleitet werden. Auf den Verfahrensschritt 5 endet das Verfahren im Verfahrensschritt 6, wenn die zu speichernde Energie begrenzt werden soll. Liegt die zu erwartende Umgebungstemperatur nicht unterhalb, sondern oberhalb des Schwellwertes, so kann auf den Verfahrensschritt 4 auch direkt der Verfahrensschritt 6 folgen.

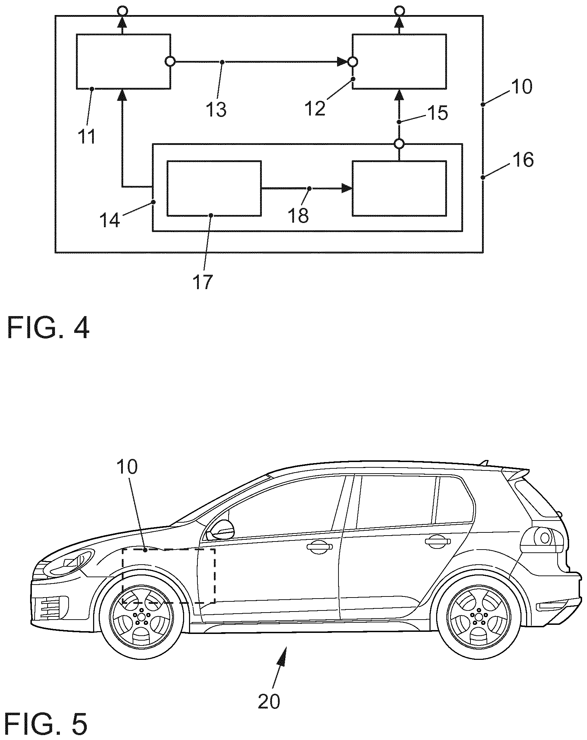

Figur 4 zeigt schematisch ein erstes Ausführungsbeispiel einer erfindungsgemäßen Brennstoffzellenvorrichtung, die insbesondere ausgebildet sein kann, um das erfindungsgemäße Verfahren durchzuführen.

Die Brennstoffzellenvorrichtung 10 weist eine Brennstoffzelle 11 und einen Speicher 12 zur Speicherung von elektrischer Energie auf. Der Speicher 12 und die Brennstoffzelle 11 sind durch eine Energieleitung 13 Energie übertragend miteinander verbunden. Dabei kann die Energieleitung 13 die Brennstoffzelle 11 direkt oder indirekt mit dem Speicher 12 verbinden.

Ferner ist die Brennstoffzellenvorrichtung 10 des Ausführungsbeispiels der Figur 4 mit einer Steuereinrichtung 14 dargestellt. Die Steuereinrichtung 14 ist durch eine Steuerleitung 15 Steuersignal übertragend mit dem Speicher 12 verbunden. Insbesondere kann die Steuereinrichtung 14 einen Ladebegrenzer 16 aufweisen, der einen als Steuersignal an den Speicher 12 übertragbaren Betriebsparameter des Speichers 12 bereitstellen kann. Der Betriebsparameter ist vorzugsweise die maximal im Speicher 12 zu speichernde Energie. Der Speicher 12 der Figur 1 kann also Elektronikelemente, zum Beispiel ein Batteriemanagementsystem, aufweisen, mit deren Hilfe die maximal zu speichernde Energie des Speichers 12 einstellbar ist. Alternativ kann die Brennstoffzellenvorrichtung 10 eine separat vom Speicher 12 ausgebildete Elektronikeinheit, etwa das Batteriemanagementsystem, aufweisen, die durch die Steuerleitung 15 Steuersignal übertragend mit dem Ladebegrenzer 16 verbunden ist und die die maximal im Speicher 12 zu speichernde Energie einstellt. Auch ist es möglich, dass das Batteriemanagementsystem Teil der Steuereinrichtung 14 ist.

Um die maximal zu speichernde Energie in Abhängigkeit von einer aktuellen oder einer zu erwartenden Umgebungstemperatur der Brennstoffzellenvorrichtung 10 begrenzen zu können, weist die Brennstoffzellenvorrichtung 10 vorzugsweise eine Umgebungstemperatur-Bestimmungseinheit 17 auf, die beispielsweise Teil der Steuereinrichtung 14 sein kann. Die Umgebungstemperatur-Bestimmungseinheit 17 ist im Ausführungsbeispiel der Figur 4 durch eine Datenleitung 18 Daten übertragend mit dem Ladebegrenzer 16 verbunden. Über die Datenleitung 18 wird im Betrieb der Brennstoffzellenvorrichtung 10 ein die aktuelle oder die zu erwartende Umgebungstemperatur repräsentierendes Datensignal von der Umgebungstemperatur-Bestimmungseinheit 17 an den Ladebegrenzer 16 übertragen. Auch das Batteriemanagementsystem kann Teil der Umgebungstemperatur-Bestimmungseinheit 17 sein.

Soll die maximal zu speichernde Energie lediglich anhand der aktuell herrschenden Temperatur begrenzt werden, so kann es ausreichen, wenn die Umgebungstemperatur-Bestimmungseinheit 17 einen Temperatursensor aufweist. Falls die zu erwartende Umgebungstemperatur anhand der aktuellen Umgebungstemperatur abgeschätzt werden soll, kann die Umgebungstemperatur-Bestimmungseinheit 17 alternativ oder zusätzlich zum Temperatursensor eine Temperaturvorhersageeinheit zur Vorhersage der zu erwartenden Umgebungstemperatur aufweisen. Soll die zu erwartende Umgebungstemperatur der Brennstoffzellenvorrichtung 10 von einer externen Datenquelle bereitgestellt werden, so kann die Umgebungstemperatur-Bestimmungseinheit 17 einen Dateneingang zum Empfang von zu erwartende Umgebungstemperaturen repräsentierenden Daten aufweisen.

Figur 5 zeigt schematisch ein Ausführungsbeispiel eines erfindungsgemäßen Kraftfahrzeuges mit einer Brennstoffzellenvorrichtung, wobei für Elemente, die in Funktion und/oder Aufbau den Elementen des Ausführungsbeispiels der Figur 4 entsprechen, dieselben Bezugszeichen verwendet sind.

Figur 5 zeigt schematisch ein Kraftfahrzeug 20 mit der erfindungsgemäßen Brennstoffzellenvorrichtung 10. Beispielsweise stellt die Brennstoffzellenvorrichtung 10 Antriebsenergie für das Kraftfahrzeug 20 bereit, wobei das Kraftfahrzeug 20 zumindest teilweise oder sogar vollständig mit von der Brennstoffzellenvorrichtung 10 bereitgestellter Energie antreibbar ist.

### Bezugszeichenliste

- 1: Verfahren
- 2: Start
- 3: Umgebungstemperatur bestimmen
- 4, 4': Vergleich Umgebungstemperatur mit vorgegebener Temperatur (Grenzwert / Schwellwert)
- 5: zu speichernde Energie begrenzen
- 6: Ende
- 7: zu erwartende Umgebungstemperatur bestimmen
- 8: zu erwartende Umgebungstemperatur empfangen
- 10: Brennstoffzellenvorrichtung
- 11: Brennstoffzelle
- 12: Speicher
- 13: Energieleitung
- 14: Steuereinrichtung
- 15: Steuerleitung
- 16: Ladebegrenzer
- 17: Umgebungstemperatur-Bestimmungseinheit
- 18: Datenleitung
- 20: Kraftfahrzeug

## Patentansprüche

1. Verfahren (1) zum Betreiben einer Brennstoffzellenvorrichtung (10), bei dem mit einer Brennstoffzelle (11) elektrische Energie bereitgestellt und zumindest teilweise gespeichert wird, wobei ein Wert für eine maximal zu speichernde Energie in Abhängigkeit von einer Umgebungstemperatur der Brennstoffzelle (11) vorgegeben wird (5), **dadurch gekennzeichnet, dass** die maximal zu speichernde Energie so begrenzt vorgegeben wird, dass eine Differenzenergie zwischen der maximal speicherbaren Energie und der vorgegebenen maximal zu speichernden Energie ausreicht, damit sich die Brennstoffzelle (11) bei einem Start der Brennstoffzellenvorrichtung (10) durch interne Verluste bei der Bereitstellung der Differenzenergie selbst ausreichend aufwärmt.

2. Verfahren (1) nach Anspruch 1, **dadurch gekennzeichnet, dass** die Umgebungstemperatur mit einer vorgegebenen Temperatur verglichen (4, 4') und die maximal zu speichernde Energie begrenzt wird, wenn die Umgebungstemperatur unterhalb der vorgegebenen Temperatur liegt.

3. Verfahren (1) nach Anspruch 1 oder 2, **dadurch gekennzeichnet, dass** als Umgebungstemperatur eine während eines bevorstehenden Startvorgangs voraussichtlich herrschende Umgebungstemperatur bestimmt wird (7).

4. Brennstoffzellenvorrichtung (10) mit einer Brennstoffzelle (11) und einem Energie übertragend mit der Brennstoffzelle (11) verbundenen Speicher (12) elektrischer Energie, wobei die Brennstoffzellenvorrichtung (10) eine Umgebungstemperatur-Bestimmungseinheit (17) und einen Ladebegrenzer (16), der ausgebildet ist, die im Speicher (12) maximal zu speichernde Energie in Abhängigkeit eines Steuersignals der Umgebungstemperatur-Bestimmungseinheit (17) zu begrenzen, aufweist, **dadurch gekennzeichnet, dass** der Ladebegrenzer (16) ausgebildet ist, die maximal zu speichernde Energie so begrenzt vorzugeben, dass eine Differenzenergie zwischen der maximal speicherbaren Energie und der vorgegebenen maximal zu speichernden Energie ausreicht, damit sich die Brennstoffzelle (11) bei einem Start der Brennstoffzellenvorrichtung (10) durch interne Verluste bei der Bereitstellung der Differenzenergie selbst ausreichend aufwärmt.

5. Brennstoffzellenvorrichtung (10) nach Anspruch 4, **dadurch gekennzeichnet, dass** die Umgebungstemperatur-Bestimmungseinheit (17) eine Temperaturvorhersageeinheit zur Vorhersage von zu erwartenden Umgebungstemperaturen aufweist.

6. Brennstoffzellenvorrichtung (10) nach Anspruch 4 oder 5, **dadurch gekennzeichnet, dass** die Umgebungstemperatur-Bestimmungseinheit (17) einen Dateneingang zum Empfang von zu erwartende Umgebungstemperaturen repräsentierenden Temperaturdaten aufweist.

7. Brennstoffzellenvorrichtung (10) nach einem der Ansprüche 4 bis 6, **dadurch gekennzeichnet, dass** der Speicher (12) eine Antriebsenergie für ein Kraftfahrzeug (20) speichernde, wiederaufladbare Batterie ist.

8. Kraftfahrzeug (20) mit einem Antriebssystem und einer Antriebsenergie übertragend mit dem Antriebssystem verbundenen Brennstoffzellenvorrichtung (10), **dadurch gekennzeichnet, dass** die Brennstoffzellenvorrichtung (10) eine Brennstoffzellenvorrichtung (10) nach einem der Ansprüche 4 bis 7 ist.

## Claims

1. Method (1) for operating a fuel cell device (10), in which electrical energy is made available with a fuel cell (11) and is at least partially stored, wherein a maximum amount of energy to be stored is predefined (5) as a function of an ambient temperature of the fuel cell (11), **characterised in that** the maximum amount of energy to be stored is predefined in a limited way, such that a difference in energy between the maximum energy that can be stored and the predefined maximum amount of energy to be stored is sufficient for the fuel cell (11) to heat itself up sufficiently by means of internal losses when the difference in energy is made available at a start of the fuel cell device (10).

2. Method (1) according to claim 1, **characterised in that** the ambient temperature is compared (4, 4') with a predefined temperature and the maximum amount of energy to be stored is limited, if the ambient temperature is below the predefined temperature.

3. Method (1) according to claim 1 or 2, **characterised in that** an ambient temperature which is expected to prevail during an imminent starting process is determined (7) as the ambient temperature.

4. Fuel cell device (10) having a fuel cell (11) and an accumulator (12) for storing electrical energy, which is connected to the fuel cell (11) in an energy-transmitting fashion, wherein the fuel cell device (10) comprises an ambient temperature-determining unit (17) and a charge limiter (16), which is adapted to limit the maximum amount of energy to be stored in the accumulator (12) as a function of a control signal of the ambient temperature-determining unit (17), **characterised in that** the charge limiter (16) is adapted to predefine in a limited way the maximum amount of energy to be stored, such that a difference in energy between the maximum amount of energy that can be stored and the predefined maximum amount of energy to be stored is sufficient for the fuel cell (11) to heat itself up sufficiently by means of internal losses when the difference in energy is made available at a start of the fuel cell device (10).

5. Fuel cell device (10) according to claim 4, **characterised in that** the ambient temperature-determining unit (17) comprises a temperature prediction unit for predicting expected ambient temperatures.

6. Fuel cell device (10) according to claim 4 or 5, **characterised in that** the ambient temperature-determining unit (17) comprises a data input for receiving temperature data representing expected ambient temperatures.

7. Fuel cell device (10) according to any one of claims 4 to 6, **characterised in that** the accumulator (12) is a rechargeable battery which stores drive energy for a motor vehicle (20).

8. Motor vehicle (20) having a drive system and a fuel cell device (10) connected to the drive system in a drive energy-transmitting fashion, **characterised in that** the fuel cell device (10) is a fuel cell device (10) according to any one of claims 4 to 7.

## Revendications

1. Procédé (1) de fonctionnement d'un dispositif à pile à combustible (10), dans lequel de l'énergie électrique est mise à disposition avec une pile à combustible (11) et stockée au moins en partie, dans lequel une valeur pour une énergie maximum à stocker est prédéfinie (5) en fonction d'une température ambiante de la pile à combustible (11), **caractérisé en ce que** l'énergie maximum à stocker est limitée de sorte qu'une énergie de différence entre l'énergie maximum stockable et l'énergie maximum à stocker prédéfinie suffit pour que la pile à combustible (11) chauffe elle-même suffisamment au démarrage du dispositif à pile à combustible (10) par pertes internes lors de la mise à disposition de l'énergie de différence.

2. Procédé (1) selon la revendication 1, **caractérisé en ce que** la température ambiante est comparée avec une température prédéfinie (4, 4') et l'énergie maximum à stocker est limitée lorsque la température ambiante se situe sous la température prédéfinie.

3. Procédé (1) selon la revendication 1 ou 2, **caractérisé en ce qu'**une température ambiante régnant probablement pendant une procédure de démarrage imminente est déterminée en tant que température ambiante (7).

4. Dispositif à pile à combustible (10) avec une pile à combustible (11) et un accumulateur (12) d'énergie électrique relié à la pile à combustible (11) avec transfert d'énergie, dans lequel le dispositif à pile à combustible (10) présente une unité de détermination de température ambiante (17) et un limiteur de charge (16), qui est réalisé pour limiter l'énergie maximum à stocker dans l'accumulateur (12) en fonction d'un signal de commande de l'unité de détermination de température ambiante (17), **caractérisé en ce que** le limiteur de charge (16) est réalisé pour prédéfinir l'énergie maximum à stocker de manière si limitée qu'une énergie de différence entre l'énergie maximum stockable et l'énergie maximum à stocker prédéfinie suffit pour que la pile à combustible (11) chauffe elle-même suffisamment au démarrage du dispositif à pile à combustible (10) par pertes internes lors de la mise à disposition de l'énergie de différence.

5. Dispositif à pile à combustible (10) selon la revendication 4, **caractérisé en ce que** l'unité de détermination de température ambiante (17) présente une unité de prévision de température pour la prévision de températures ambiantes attendues.

6. Dispositif à pile à combustible (10) selon la revendication 4 ou 5, **caractérisé en ce que** l'unité de détermination de température ambiante (17) présente une entrée de données pour la réception de données de température représentant des températures ambiantes attendues.

7. Dispositif à pile à combustible (10) selon l'une quelconque des revendications 4 à 6, **caractérisé en ce que** l'accumulateur (12) est une batterie rechargeable, stockant une force motrice pour un véhicule automobile (20).

8. Véhicule automobile (20) avec un système d'entraînement et un dispositif à pile à combustible (10) relié au système d'entraînement avec transfert de force motrice, **caractérisé en ce que** le dispositif à pile à combustible (10) est un dispositif à pile à combustible (10) selon l'une quelconque des revendications 4 à 7.
